# EUROPEAN PATENT APPLICATION

(11) **EP 1 835 189 A2**
(43) Date of publication of application: **19.09.2007**
(21) Application number: 07103977.0
(22) Date of filing: 13.03.2007
(51) Int. Cl.: F16C 33/14

(54) **Enhanced bearing durability rotating member method and apparatus**

(30) Priority: 14.03.2006 US 375293
(71) Applicant: GENERAL ELECTRIC COMPANY, Schenectady, NY 12345 (US)
(72) Inventor: Thamboo, Samuel V., Latham, NY 12110 (US); Ellis, Edward Kenneth, Brewer, ME 04412 (US); Childs, JR., William Harold, Bangor, ME 04401 (US); Spiegel, Lyle B., Niskayuna, NY 12309 (US)
(74) Representative: Szary, Anne Catherine

(57) **Abstract**

Disclosed herein is a method of preparing a rotating member (10) to enhance bearing durability comprising, applying a metal material (12) to a surface (26) of the rotor (10) orthogonal to a longitudinal axis (16) of the rotor (10), the material (12) having a chromium content less than a chromium content of the rotating member (10), and surfacing said metal material (12) orthogonal to the axis (16) of the rotor (10). Further disclosed herein is an enhanced bearing durability rotating member (10) comprising, a rotor (10) with a metal material (12) surface (18, 22) orthogonal to a longitudinal axis (16) of the rotor (10) having less chromium content than the rotor (10), and a boundary layer (26) between the metal material surface (18, 22) and the rotor (10) orthogonal to the axis (16) of the rotor (10).

## Description

### BACKGROUND OF THE INVENTION

The present invention relates to the chemical composition of steel used for rotors of turbines, and more particularly to the chromium content of the steel bearing surfaces of the rotors.

It is common for rotors of turbines to be forged from steel containing chromium in excess of nine percent. Such rotors are well suited for most requirements of turbine rotors including chemical resistance and stress loading, for example. One problem, however, that this high chromium content has historically shown to cause "wire-wooling." Wire-wooling is a process that damages bearings that ride against high chromium metals. It is therefore not uncommon for bearings to experience wire-wooling failures while riding on vertical bearing thrust surfaces as well as on horizontal cylindrical surfaces where these surfaces exhibit high chromium content. One method employed to reduce wire-wooling is to apply an intermediate metal material with chromium content of less than 2.2 weight percent between the turbine rotor and the bearing.

A process that has been used to apply an intermediate layer to cylindrical surfaces, is to shrink a cylindrical alloy sleeve containing less than 2.2 weight percent chromium over the cylindrical surfaces. Though well suited for cylindrical portions of a turbine subjected to moderate stresses this method cannot be applied to highly loaded or flat surfaces such as those used for thrust control. The shrunk-on approach is only a mechanical attachment and could come loose during operation especially in high stress locations.

For flat thrust surfaces one conventional method of applying an "overlay" of low chromium steel involves welding low chromium steel over the rotor to create a surface of steel containing less than 2.2 weight percent chromium. To minimize the welding time required, a submerged arc welding (SAW) process is employed since it allows for very high rates of metal deposition. The SAW process, however, permits molten metal to pool resulting in dissolution of some chromium from the high chromium steel into the low chromium overlay potentially resulting in a bearing surface with chromium content in excess of the 2.2 weight percent maximum desired level. To prevent this dissolution, a few layers of gas tungsten arc weld (GTAW), also known as tungsten inert gas (TIG) welding, may be applied prior to the SAW process. The lower welding temperature of the GTAW permits very little chromium dissolution to take place and creates a barrier that prevents dissolution from the base material into the SAW layers.

Another drawback of the large pool of molten metal generated with the SAW process may occur while welding onto a vertical surface. During vertical welds the force of gravity acting on the molten metal can cause it to flow downward away from the desired location. Since by design thrust bearing surfaces are orthogonal to the rotational axis of the rotor, and it is not practical to position the rotor axis in orientations other than horizontal; the thrust surfaces are oriented vertically.

A method developed to overcome the running of the molten metal during the SAW process is to machine the thrust surface to a conical angle of typically 22.5 degrees from vertical. Such an angle provides enough of a horizontal component to prevent the molten metal from running. However, use of the 22.5-degree angle weld preparation requires machining a large volume of the rotor material only to replace it with a larger volume of weld metal. A significant portion of this weld metal must then be machined away to return the thrust-bearing surface to a vertical orientation. This process, though effective is very time consuming and costly.

An additional concern created by this process is the degradation that results in the material properties of the original base metal of the rotor. Of specific concern is the fillet radius formed between a cylindrical bearing surface (journal) concentric to the rotational axis of the rotor and the thrust-bearing surface orthogonal to it. After welding the 22.5-degree or greater angle the fillet radius is completely covered by welded on metal that must be machined away to reform the fillet radius. During the welding process temperatures of the base metal of the rotor are elevated in what is commonly known as a heat-affected zone (HAZ). Some of the base metal in the HAZ undergoes material property changes that result in a weakening of the metal. Since the fillet radius is known to be a highly stressed area during operating conditions involving high levels of thrust any weakening of the base metal in this area may contribute to premature rotor failures.

Additionally, the SAW process frequently leaves defects embedded within the welded metal that, left undetected and corrected, can also lead to premature rotor failures. Ultrasonic testing (UT) is typically used to detect such defects. UT is most effective on layers that have a uniform thickness and a weld line that is perpendicular to the outer surface on which the UT transducer is placed; neither of which conditions exist with the conical angle that the SAW process described above is performed on.

Accordingly there is a need in the art for a more efficient and less defect prone method of applying a low chromium content layer to the thrust bearing surfaces of a turbine rotor without weakening base material properties in specific locations.

### BRIEF DESCRIPTION OF THE INVENTION

Disclosed herein is a method that relates to preparing a rotating member to enhance bearing durability comprising, applying a metal material to a surface of the rotating member, such as a rotor, orthogonal to a longitudinal axis of the rotating member, the material having a chromium content less than a chromium content of the rotating member, and surfacing said metal material orthogonal to the axis of the rotating member.

Further disclosed herein is an apparatus that relates to an enhanced bearing durability rotating member, comprising, a rotating member with a metal material surface orthogonal to a longitudinal axis of the rotating member having less chromium content than the rotating member, and a boundary layer between the metal material surface and the rotating member orthogonal to the axis of the rotating member.

### BRIEF DESCRIPTION OF THE DRAWINGS

Referring now to the figures, which are exemplary embodiments, and wherein like elements are numbered alike:
FIG. 1 depicts a partial cross sectional view of a welded and surfaced turbine rotor according to an embodiment of the invention;
FIG. 2 depicts a graph of chromium content versus distance from a weld line in accordance with an embodiment of the invention;
FIG. 3 depicts a partially welded cross sectional view of a turbine rotor in accordance with an embodiment of the invention; and
FIG. 4 depicts a graph of Knoop hardness versus distance from a weld preparation line in accordance with an embodiment of the invention.

### DETAILED DESCRIPTION OF THE INVENTION

A detailed description of several embodiments of the disclosed apparatus and method are presented herein by way of exemplification and not limitation with reference to the Figures.

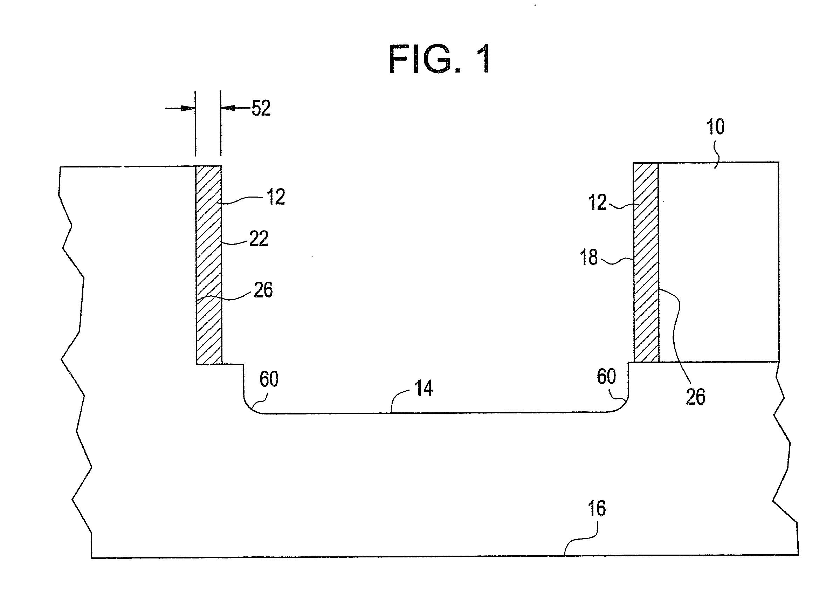

Referring to FIG. 1, a partial cross sectional view of a rotating member illustrated in these embodiments as a turbine rotor according to an embodiment of the invention is depicted. A cylindrical bearing surface (journal) 14 of a turbine rotor 10 is shown in a horizontal orientation and is concentric to a longitudinal rotor axis 16. Orthogonal to the rotor axis 16 and the journal 14, and consequently oriented vertically, are a first thrust bearing surface 18 and a second thrust bearing surface 22. The first vertical thrust bearing surface 18 prevents axial movement of the rotor in one direction, while the second vertical thrust bearing surface 22, opposing the first thrust surface 18, prevents axial movement of the rotor 10 in the opposite direction. Bearings (not shown) that ride against the thrust bearing surfaces 18, 22 of the rotor 10 are subject to premature failure due to wire-wooling if the thrust surfaces contain more than 2.2% chromium.

It is common for the turbine rotor 10 to be forged of high chromium content steel, typically in excess of nine weight percent chromium, and more specifically in the range of 9.5 to 13 weight percent chromium. To prevent wire-wooling failures and to thereby enhance bearing durability, an embodiment of the invention applies layers 12 of lower chromium content metal material than the rotor 10, and more specifically less than 2.2% chromium, to the rotor 10.

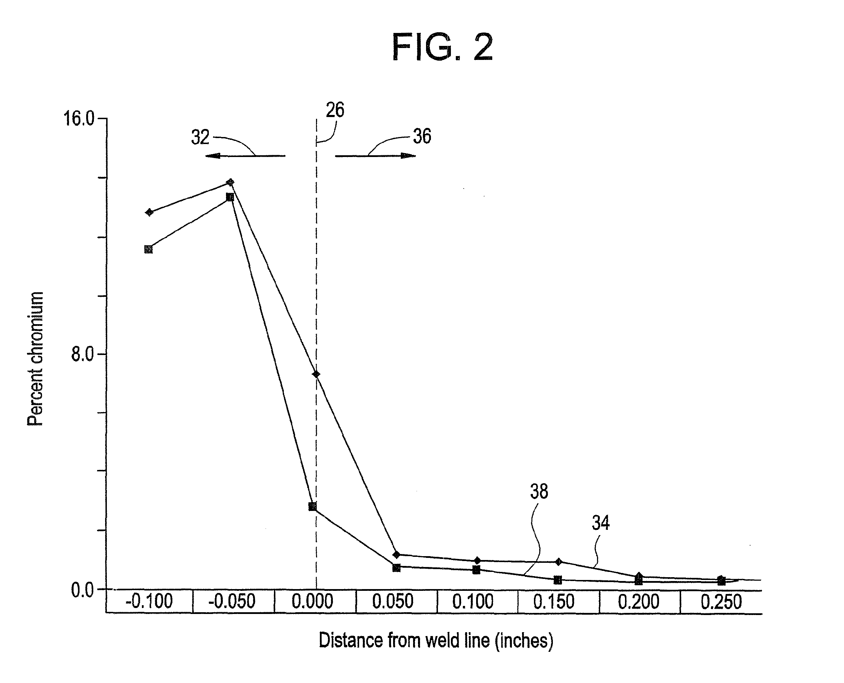

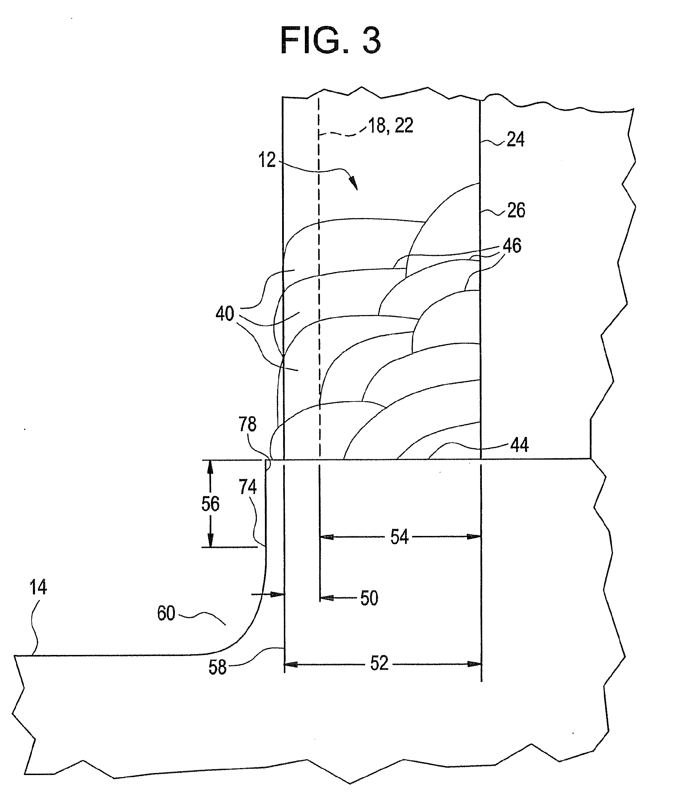

One embodiment of the invention utilizes a GTAW process to weld a low, about 0.5%, chromium layer 12 onto rotor thrust surfaces 24 (see FIG. 3) thereby creating an boundary layer, designated here as weld line 26, between the welded metal layer 12 and the turbine rotor 10. The GTAW process was chosen because of its lower total heat input as compared to the SAW process. This lower heat input minimizes pooling of molten metal thereby permitting a weld that has little dissolution of the high chromium content of the base material into the weld material layer 12. Test data that supports this statement is summarized in the graph shown in FIG. 2. The graph depicts the weight percent of chromium on the Y-axis and the distance from a weld line 26 on the X-axis in millimeters. Base materials 32 are shown to the left of the weld line 26 and welded materials 36 are shown to the right of the weld line 26. As can be determined from the graph, the base materials 32 used were in excess of nine weight percent chromium and more specifically were 12.8% chromium for sample one 34 and 11.7% chromium for sample two 38 at a distance of 0.10inches (2.54mm) from the weld line 26. In contrast, the weld materials 36 had chromium content of 0.4% for sample one 34 and 0.3% for sample two 38 at a distance of 0.20inches (5.08mm) from the weld line 26. The chromium content drops off very rapidly when moving away from the weld line 26 in the direction of the welded materials 36. For example the chromium content of sample one 34 drops from 7.3% at the weld line 26 to 1.2% just 0.05inches (1.27mm) away, while the chromium content of sample two 38 drops from 2.8% at the weld line 26 to 0.8% just 0.05inches (1.27mm) away. Thus at 0.05inches (1.27mm) from the weld line 26 the chromium content is well below the desired maximum 2.2% chromium content level for a thrust surface 18, 22.

Another advantage stemming from the lower heat input available with the GTAW process is the ability to weld on a vertical surface without gravity causing the molten metal to run downward. A vertical weld however does require that the weld beads 40 as shown in FIG. 3 be placed on top of at least a partially horizontal surface (step) 44. Each successive weld bead 40 can use the preceding weld bead 40 as a surface 46 to weld upon, thereby building vertically as well as horizontally to create a low chromium content weld layer 12 along the rotor thrust surface 24. Although this embodiment has used the step 44, as a horizontal surface on which to start building upon, it could just as well build directly upon a fillet radius 60 formed between the journal 14 and an adjacent surface 78 orthogonal to the journal 14 without using the step 44. Being able to weld upon the vertical thrust surface 24 negates the need to machine a 22.5-degree angle into the thrust surface 24, thereby saving considerable processing time and the associated costs.

The processing time required to complete the weld upon the thrust surface 24 depends, partially, upon how thick the welded layer 12 must be. There are two main characteristics to consider when determining what weld depth 52 is required. First is the distance from the weld line 26 required to assure that a chromium content of less than 2.2% is achieved, and second the machining depth 50 necessary to create a smooth bearing surface 18, 22 from the rough welded surface 58. To determine a chromium content minimum depth 54, we analyze FIG. 2 to see at what distance from the weld line 26 the chromium content is assured to be less than the 2.2% desired level. As determined above a distance of 0.05inches (1.27mm) from the weld line 26, in the direction of the welded material 36, drops the chromium content to less than 1.5% chromium. A safety margin of 0.10inches (2.54mm), for example, may also be added to assure that the 2.2% chromium content is maintained at the finished surfaces 18 and 22 resulting in a chromium content minimum distance 54 of (0.05 + 0.10 = 0.15 inches (3.81mm)). Experience with machining GTAW welded surfaces has determined that a minimum machining depth 50, of 0.10inches, for example, might be chosen to assure that all welded surface irregularities have been machined away leaving an acceptable thrust bearing surface 18, 22. Adding the chromium content minimum distance 54 to the machining distance 50 (0.15 + 0.10 = 0.25inches (6.35mm)) results in a weld depth 52 of 0.25 inches for this embodiment.

Another consideration required prior to welding, when using a step 44, is determining a step height 56 at which to locate the step 44 above a transition region defined here as the fillet radius 60. In one embodiment of the invention the step height 56 is established based on the material properties of the base material 32. Field experience has proven that the material properties of the as forged turbine rotor 10 are sufficient to meet the stresses placed on the rotor 10 during its operational life. The fillet radius 60 formed between the thrust surfaces 18, 22 and the journal 14 has been shown, through finite element analysis, to have the highest stresses of any area of the rotor 10 during high thrust load conditions. It is therefore desirable to maintain the material properties of the as forged rotor 10 in the highly stressed radius 60 after completion of the low chromium layer 12 application.

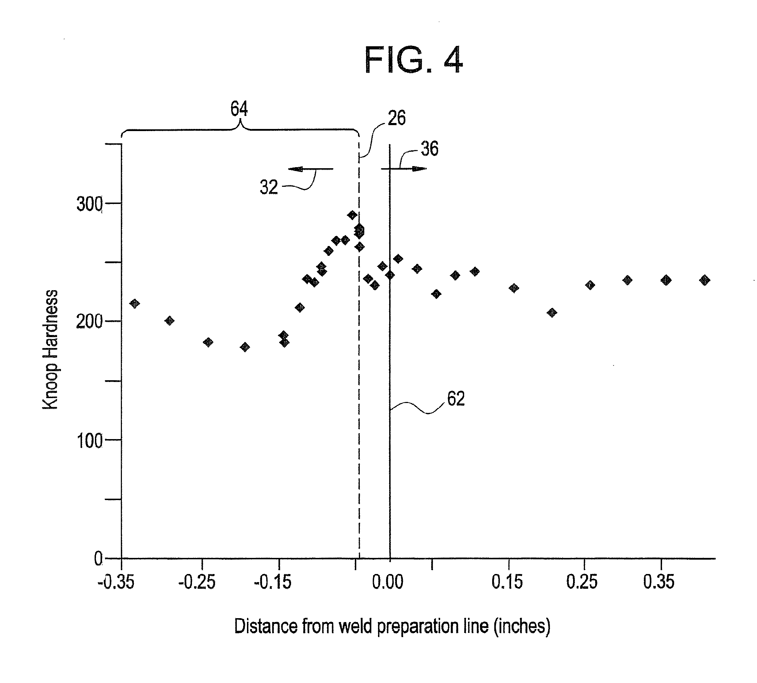

Referring now to FIG. 4, a graph plotting data of material properties, in this case material hardness, versus distance from a weld preparation line 62 for a sample that has been GTAW welded and then locally tempered is shown. For clarification of the difference between the weld preparation line 62 and the weld line 26, the weld preparation line 62 is the location of the base metal 32 prior to welding and the weld line 26 is the transition line of the base metal 32 that did not melt during the welding process. The graph reveals the Knoop hardness at 500 kg of the base material 32, closest to the weld line 26, is of higher hardness, about 290 Knoop, than an as forged material hardness 66 of about 226 Knoop. This increase in hardness results from the weld process raising the temperature of the metal above the austenizing temperature of the steel. After the welding head has passed the steel cools very rapidly because of the thermal mass of the rotor 10. The rapid cooling causes a transformation to the harder martensite structure. The base material 32, further from the weld line 26, is also heated but not enough to transform to austenite and thus is actually softer, about 175 Knoop, than the as forged material hardness 66 due to the tempering effect of this elevated temperature. Moving in the opposite direction from the weld line 26, that is in the direction of the welded material 36, reveals that the hardness holds relatively stable at values similar to the as forged material hardness 66, about 220 Knoop, since it has been softened by localized tempering.

According to the graph, a heat-affected zone (HAZ) 64, defined as the zone where the heat has changed the resulting hardness of the material, extends into the base material 32 a distance of about 0.35inches (8.9mm). The hardness of any base material 32 that is further from the weld preparation line 26 than 0.35inches has been unaltered by the heat of the weld. Thus, to assure that the highly stressed radius 60 retains the original material properties of the as forged material hardness 66, of about 226 Knoop, the height 56 of the step 44 should be greater than 0.35inches from a tangency point 74 between the fillet radius 60 and an adjacent surface 78 orthogonal to the axis of the rotor 10 (see FIG. 3) immediately above the radius 60. For a margin of safety a step height 56 of 0.50inches (12.7mm) or more may be chosen in actual practice. Depending on the specific weld parameters used and the size of the HAZ 64 other step heights 56 may be employed. The maximum step height, by design does not come in contact with the bearing surface and therefore there is no risk of wire-wooling.

Some embodiments of the invention may include the following advantages: no weld machining preparation is required, welding time and material requirements are minimized, the finished bearing surface resists wire-wooling problems of associated bearings and has a chromium content of less than 2.2%, and base metal material properties, in a highly stressed fillet radius area, are unaffected by the welding process.

While the embodiments of the disclosed method and apparatus have been described with reference to exemplary embodiments, it will be understood by those skilled in the art that various changes may be made and equivalents may be substituted for elements thereof without departing from the scope of the embodiments of the disclosed method and apparatus. In addition, many modifications may be made to adapt a particular situation or material to the teachings of the embodiments of the disclosed method and apparatus without departing from the essential scope thereof. Therefore, it is intended that the embodiments of the disclosed method and apparatus not be limited to the particular embodiments disclosed as the best mode contemplated for carrying out the embodiments of the disclosed method and apparatus, but that the embodiments of the disclosed method and apparatus will include all embodiments falling within the scope of the appended claims.

## Claims

1. A method of preparing a rotating member (10) to enhance bearing durability, comprising:
applying a metal material (12) to a surface (26) of the rotating member (10) orthogonal to a longitudinal axis (16) of the rotating member (10), the material (12) having a chromium content less than a chromium content of the rotating member (10); and
surfacing said metal material (12) orthogonal to the axis (16) of the rotating member (10).

2. The method of claim 1, wherein a surface (18, 22) of the applied metal material (12) has chromium content of less than 2.2 percent.

3. The method of claim 1, wherein the applied metal material (12) contains between 0.25 and 0.75 weight percent chromium.

4. The method of claim 1, further comprising:
welding the metal material (12) to the orthogonal surface (26) with a gas tungsten arc weld (GTAW) process;
applying the metal material (12) while the orthogonal surface (26) is substantially vertical; and
determining a depth of metal material (12) to apply based on chromium content of the applied material (12).

5. The method of claim 1, further comprising:
forming a step (44) substantially parallel to the axis (16); and
applying the metal material (12) at radial distances from the axis (16) greater than the step (44).

6. The method of claim 1, further comprising:
locating the application of the metal material (12) to prevent altering material properties of the rotor (10) in a transition region (60) between a bearing surface (18, 22) substantially parallel to the axis (16) and an adjacent surface (14) orthogonal to the bearing surface (18, 22).

7. An enhanced bearing durability rotating member (10), comprising:
a rotating member (10);
a metal material surface (18, 22) orthogonal to a longitudinal axis (16) of the rotating member (10) having less chromium content than the rotating member (10); and
a boundary layer (26) between the metal material surface (18, 22) and the rotating member (10) orthogonal to the longitudinal axis (16) of the rotating member (10); wherein:
the metal material surface (18, 22) is a thrust-bearing surface (18, 22); and
the metal material surface (18, 22) has chromium content of less than 2.2 percent.

8. The rotating member (10) of claim 7, wherein the applied metal material (12) contains between 0.25 and 0.75 weight percent chromium.

9. The rotating member (10) of claim 7, wherein the metal material (12) is welded to the orthogonal surface (26) with a gas tungsten arc weld (GTAW) process.

10. The rotating member (10) of claim 7, wherein the material properties of the rotating member (10) in a transition region (60) between a bearing surface (14) substantially parallel to the axis (16) and an adjacent surface (78) orthogonal to the bearing surface (14) are unaltered by the application of the metal material (12); and the applied metal material (12) is heat tempered.
